# EUROPEAN PATENT APPLICATION

(11) **EP 2 043 292 A2**
(43) Date of publication of application: **01.04.2009**
(21) Application number: 08161383.8
(22) Date of filing: 29.07.2008
(51) Int. Cl.: H04L 7/00, H04L 5/02

(54) **Synchronization system, synchronization signal transmitter, clock supplier and synchronization method**

(30) Priority: 28.09.2007 JP 2007253673
(71) Applicant: Fujitsu Ltd., Kawasaki-shi, Kanagawa 211-8588 (JP)
(72) Inventor: Taguchi, Kiyoshi, Kawasaki-shi, Kanagawa 211-8588 (JP)
(74) Representative: Wilding, Frances Ward

(57) **Abstract**

A synchronization system for establishing synchronization between a first communications device and a second communications device connected through a communications line transmitting an xDSL signal is disclosed that includes a clock extraction part configured to extract, from a synchronous network connected to the first communications device, the synchronization clock signal of the synchronous network; a synchronization signal generation and transmission part configured to generate a synchronization signal from the synchronization clock signal and to transmit the synchronization signal to the communications line, the synchronization signal having a frequency in a frequency band different from the frequency band of the xDSL signal; a synchronization signal extraction part configured to extract the synchronization signal from the communications line; and a clock reproduction and output part configured to reproduce the synchronization clock signal from the synchronization signal and to supply the synchronization clock signal to the second communications device.

## Description

### BACKGROUND OF THE INVENTION

### 1. Field of the Invention

The present invention relates to the technique of performing communications between communications devices that need clock synchronization using xDSL (Digital Subscriber Line).

### 2. Description of the Related Art

Popular are xDSL technologies that perform high-speed digital communications using metallic lines. Examples of xDSL include ADSL (Asymmetric Digital Subscriber Line), HDSL (High-bit-rate Digital Subscriber Line), SDSL (Symmetric Digital Subscriber Line), and VDSL (Very high-bit-rate Digital Subscriber Line).

Further, xDSL is becoming faster, and, for example, VDSL offers a transmission rate of 100 Mbps for each of upstream traffic and downstream traffic. Using xDSL technologies makes it possible to perform digital data communications with ease using existing metallic lines installed as telephone lines.

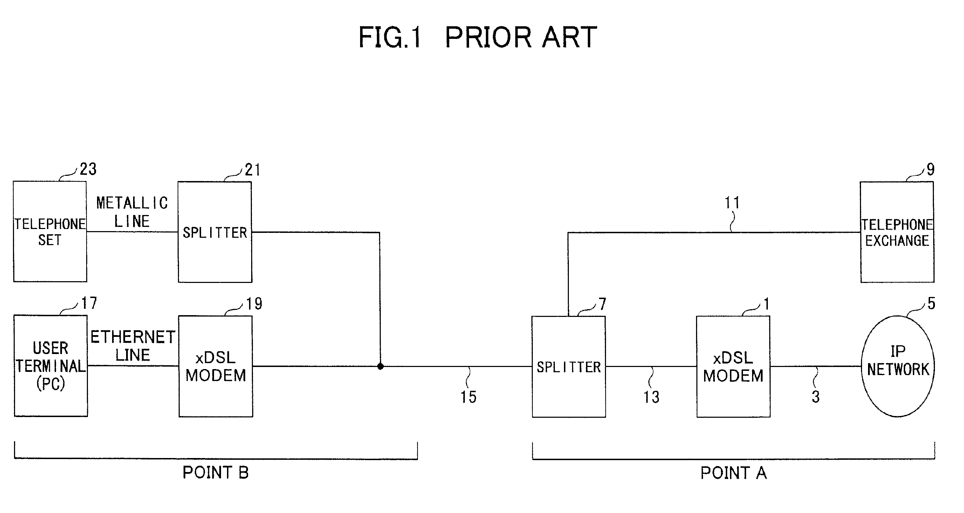

FIG. 1 is a diagram showing a conventional communications system that performs xDSL communications using metallic lines.

In the communications system shown in FIG. 1, an xDSL modem 1 is connected to an IP (Internet Protocol) network 5 through an Ethernet (registered trademark) line 3 at Point A. The xDSL modem 1 is a device having functions defined by ITU-T G.991, G.992, and G.993. A splitter 7 is connected to a telephone exchange 9 and the xDSL modem 1 through a metallic line 11 and a metallic line 13, respectively. A voice signal and an xDSL signal are multiplexed by the splitter 7 to be transmitted to the Point B side through a metallic line 15. Further, the splitter 7 splits a signal transmitted from the Point B side into a voice signal and an xDSL signal.

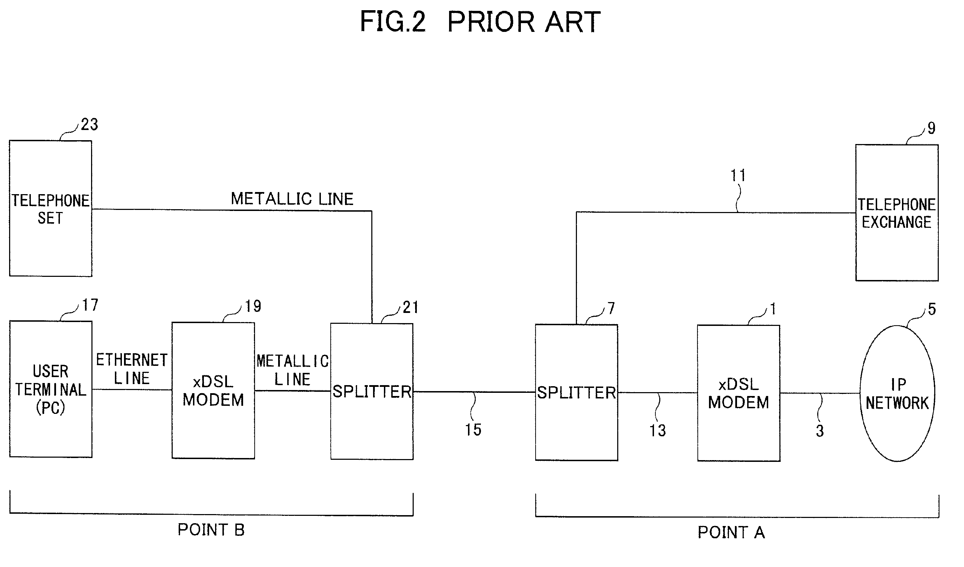

On the Point B side, an xDSL modem 19 connected to a user terminal 17 such as a personal computer (PC) generates an Ethernet signal from the signal received through the metallic line 15, and transmits the generated Ethernet signal to the user terminal 17. Further, a splitter 21 extracts a voice signal from the signal received through the metallic line 15, and transmits the extracted voice signal to a telephone set 23. Each of the metallic lines shown in FIG. 1 includes a pair of lines for differential transmission. Such an arrangement is also possible where the splitter 21 on the Point B side is provided as shown in FIG. 2.

In general, a dedicated line formed of an optical cable or coaxial cable is necessary to connect communication devices (such as ATM communication devices or SDH transmitters) operating on a synchronous network. However, it may not be possible to newly install such a cable depending on the locations of installation of the communication devices. In such a case, the communications between the communication devices may be performed by xDSL using existing metallic lines.

Reference may be made to the following documents for technologies related to the present invention.
[Patent Document 1] Japanese Laid-Open Patent Application No. 10-233767
[Patent Document 2] Japanese Laid-Open Patent Application No. 2004-129009
[Patent Document 3] Japanese Laid-Open Patent Application No. 2004-533788
[Patent Document 4] Japanese Laid-Open Patent Application No. 2005-303777

Asynchronous communications are performed in xDSL. Therefore, in the case of communicating data through xDSL between the communication devices based on network synchronization as described above, there is a problem in that it is difficult to synchronize the communication devices.

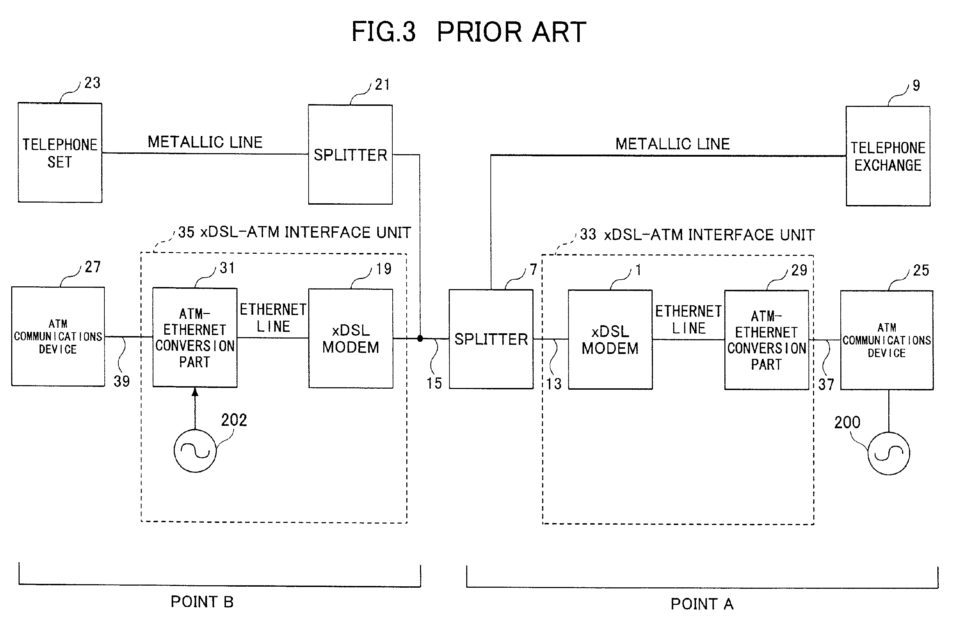

FIG. 3 is a diagram showing a configuration in the case of performing communications through xDSL between ATM communications devices 25 and 27 that are based on network synchronization. The case illustrated in FIG. 3 is different from the configuration shown in FIG. 1 in that the ATM communications device 25 is provided in place of the IP network 5 and an ATM-Ethernet conversion part 29 is further provided at Point A and that an ATM communication device 27 is provided in place of the user terminal 17 and an ATM-Ethernet conversion part 31 is further provided at Point B. Each of the ATM-Ethernet conversion parts 29 and 31 is one type of ATM communications device based on network synchronization. Further, as shown in FIG. 3, a part including the xDSL modem 1 and the ATM-Ethernet conversion part 29 is referred to as an xDSL-ATM interface unit 33, and a part including the xDSL modem 19 and the ATM-Ethernet conversion part 31 is referred to as an xDSL-ATM interface unit 35.

ATM stands for "Asynchronous Transfer Mode." However, since an SDH (Synchronous Digital Hierarchy) frame, which is a network synchronization type, is used in the physical layer of actual ATM communications devices, clock synchronization should be established between ATM communications devices for normal cell transmission and reception between the devices.

The ATM-Ethernet conversion part 29 at Point A converts an ATM cell received from an ATM line 37, which is a synchronous network, into an Ethernet frame, and inputs the Ethernet frame to the xDSL modem 1. Further, the ATM-Ethernet conversion part 29 converts an Ethernet frame received from the xDSL modem 1 into an ATM cell, and outputs the ATM cell to the ATM line 37.

The ATM-Ethernet conversion part 31 at Point B converts an ATM cell received from an ATM line 39 into an Ethernet frame, and inputs the Ethernet frame to the xDSL modem 19. Further, the ATM-Ethernet conversion part 31 converts an Ethernet frame received from the xDSL modem 19 into an ATM cell, and outputs the ATM cell to the ATM line 39.

A reference clock signal for establishing synchronization on the ATM network is supplied from a reference clock 200 of the ATM network to the ATM communications device 25 of Point A. The ATM-Ethernet conversion part 29 extracts a clock signal for synchronization (synchronization clock signal) synchronizing with the reference clock signal from a signal received through the ATM line 37, and operates in synchronization with this synchronization clock signal. It is a common technique to extract a clock signal from a signal received from a line on a synchronous network.

The ATM-Ethernet conversion part 31 at Point B has a built-in autonomous clock 202. The autonomous clock 202 supplies a local clock signal for the ATM communications between the ATM-Ethernet conversion part 31 and the ATM communications device 27, which clocks signal does not synchronize with the reference clock signal of the ATM network.

According to the configuration of FIG. 3, the clock signal supplied by the autonomous clock 202 cannot be synchronized with the reference clock signal of the ATM network. Therefore, there is a difference between the clock frequencies of the clock signals, so that there is a difference in the phase of a clock signal used between the ATM communications devices 25 and 27. This prevents normal ATM cell communications between the ATM communications devices 25 and 27. For example, underflow/overflow occurs in the data buffers of the ATM communications devices 25 and 27 to cause loss of data. If control data requiring reliability are lost, this results in poor operation.

Instead of by providing the autonomous clock 202 at Point B, synchronization may be established by inserting synchronization information into digital data (such as an Ethernet frame) at Point A, transmitting the digital data to Point B, and generating a synchronization clock signal from the synchronization information at Point B.

In this case, the ATM-Ethernet conversion part 29 at Point A extracts the synchronization clock signal of the ATM network from the ATM line 37, generates the synchronization information such as a synchronization frame and time stamp data, and transmits the generated synchronization information to the ATM-Ethernet conversion part 31 as digital data.

Then, the ATM-Ethernet conversion part 31 reproduces the synchronization clock signal using the synchronization information transmitted from the ATM-Ethernet conversion part 29, and operates in synchronization with the clock signal.

However, xDSL transmission data greatly fluctuate, and a buffer for absorbing the fluctuation is required. Further, as the xDSL speed increases, the buffer is required to be larger in capacity. Accordingly, in the case of adopting the above-described method, there is the problem of an increase in the scale of a circuit for stabilizing synchronization if a control circuit is included.

### SUMMARY OF THE INVENTION

Embodiments of the present invention may solve or reduce one or more of the above-described problems.

According to one aspect of the present invention, a technique is provided that facilitates establishing clock synchronization between communications devices based on network synchronization in the case of performing communications between the communications devices through an xDSL communications network.

According to one embodiment of the present invention, a synchronization system for establishing synchronization between a first communications device and a second communications device connected through a communications line transmitting an xDSL signal is provided. The synchronization system includes a clock extraction part configured to extract, from a synchronous network connected to the first communications device, a synchronization clock signal of the synchronous network; a synchronization signal generation and transmission part configured to generate a synchronization signal from the synchronization clock signal and to transmit the synchronization signal to the communications line, the synchronization signal having a frequency in a frequency band different from a frequency band of the xDSL signal; a synchronization signal extraction part configured to extract the synchronization signal from the communications line; and a clock reproduction and output part configured to reproduce the synchronization clock signal from the synchronization signal and to supply the synchronization clock signal to the second communications device.

According to one embodiment of the present invention, a synchronization signal transmitter transmitting a synchronization signal used to establish synchronization between a first communications device and a second communications device connected through a communications line transmitting an xDSL signal is provided. The synchronization signal transmitter includes a clock extraction part configured to extract, from a synchronous network connected to the first communications device, a synchronization clock signal of the synchronous network; and a synchronization signal generation and transmission part configured to generate the synchronization signal from the synchronization clock signal and to transmit the synchronization signal to the communications line, the synchronization signal having a frequency in a frequency band different from a frequency band of the xDSL signal.

According to one embodiment of the present invention, a clock supplier supplying a synchronization clock signal for establishing synchronization between a first communications device and a second communications device to the second communications device is provided, wherein the first communications device and the second communications device are connected through a communications line transmitting an xDSL signal. The clock supplier includes a synchronization signal extraction part configured to extract a synchronization signal from the communications line, the synchronization signal being generated from the synchronization clock signal of a synchronous network connected to the first communications device and having a frequency in a frequency band different from a frequency band of the xDSL signal; and a clock reproduction and output part configured to reproduce the synchronization clock signal from the synchronization signal and to supply the synchronization clock signal to the second communications device.

According to one embodiment of the present invention, a synchronization method for establishing synchronization between a first communications device and a second communications device connected through a communications line transmitting an xDSL signal is provided. The synchronization method includes the steps of (a) extracting, from a synchronous network connected to the first communications device, a synchronization clock signal of the synchronous network; (b) generating a synchronization signal from the synchronization clock signal and transmitting the synchronization signal to the communications line, the synchronization signal having a frequency in a frequency band different from a frequency band of the xDSL signal; (c) extracting the synchronization signal from the communications line; and (d) reproducing the synchronization clock signal from the synchronization signal and supplying the synchronization clock signal to the second communications device.

According to one aspect of the present invention, a synchronization signal having a frequency in a frequency band different from the frequency band of an xDSL signal is transmitted onto a communications line, and a synchronization clock signal is reproduced from the synchronization signal and used at a receiving end. This makes it possible to establish synchronization between communications devices via an xDSL communications network with more ease than the system of transmitting synchronization information as digital data.

### BRIEF DESCRIPTION OF THE DRAWINGS

Other objects, features and advantages of the present invention will become more apparent from the following detailed description when read in conjunction with the accompanying drawings, in which:
FIG. 1 is a diagram showing a conventional communications system that performs xDSL communications using metallic lines;
FIG. 2 is a diagram showing another conventional communications system;
FIG. 3 is a diagram showing a configuration for performing communications between ATM communications devices through xDSL;
FIG. 4 is a diagram showing a configuration of a communications system according to a first embodiment of the present invention;
FIG. 5 is a diagram showing a configuration of a communications system according to a second embodiment of the present invention;
FIG. 6 is a graph showing the frequency spectrum of a synchronization signal transmitted onto a metallic line according to the second embodiment of the present invention;
FIG. 7 is a diagram showing a first detailed configuration of xDSL-ATM interface units according to the second embodiment of the present invention;
FIG. 8 is a diagram showing signal waveforms according to the second embodiment of the present invention;
FIG. 9 is a diagram showing a circuit forming a synchronization signal transmission part according to the second embodiment of the present invention;
FIG. 10 is a diagram showing a circuit forming a synchronization signal extraction part according to the second embodiment of the present invention;
FIG. 11 is a diagram showing a second detailed configuration of the xDSL-ATM interface units according to the second embodiment of the present invention;
FIG. 12 is a diagram showing another circuit forming the synchronization signal transmission part according to the second embodiment of the present invention;
FIG. 13 is a diagram showing another circuit forming the synchronization signal extraction part according to the second embodiment of the present invention;
FIG. 14 is a diagram showing a configuration of a communications system according to a third embodiment of the present invention; and
FIG. 15 is a graph showing the frequency spectrum of a signal on a metallic line according to the third embodiment of the present invention.

### DETAILED DESCRIPTION OF THE PREFERRED EMBODIMENTS

A description is given below, with reference to the accompanying drawings, of embodiments of the present invention.

### [First Embodiment]

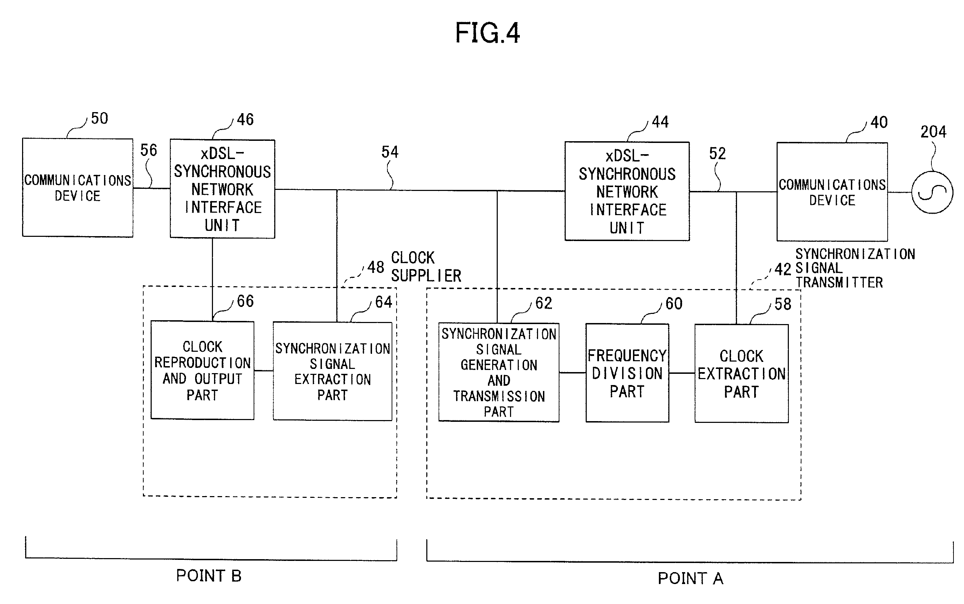

FIG. 4 is a diagram showing a configuration of a communications system according to a first embodiment of the present invention.

According to the configuration shown in FIG. 4, Point A includes a communications device 40 that needs network synchronization, a synchronization signal transmitter 42, and an xDSL-synchronous network interface unit 44. Further, Point B includes an xDSL-synchronous network interface unit 46, a clock supplier 48, and a communications device 50 that needs network synchronization.

The communications device 40 and the xDSL-synchronous network interface unit 44 are connected with a line 52 complying with the communication system of the communications device 40 (for example, a coaxial cable). The xDSL-synchronous network interface unit 44 and the xDSL-synchronous network interface unit 46 are connected with a metallic line 54 that is also usable as a telephone line. Further, the xDSL-synchronous network interface unit 46 and the communications device 50 are connected with a line 56 complying with the communication system of the communications device 50. The line 52 connecting the communications device 40 and the xDSL-synchronous network interface unit 44 forms a synchronous network. Further, each of the xDSL-synchronous network interface units 44 and 46 is one type of communications device that requires network synchronization.

The synchronization signal transmitter 42 is connected to the line 52 and the metallic line 54. The clock supplier 48 is connected to the xDSL-synchronous network interface unit 46. Further, the communications device 40 at Point A is supplied with a reference clock signal serving as a reference of synchronization in the synchronous network including the communications device 40 from a reference clock 204. Alternatively, the communications device 40 may receive the reference clock signal from an external clock generator or have a built-in clock generator that generates the reference clock signal.

Hereinafter, a clock signal that synchronizes with a reference clock signal and is transmitted between communication devices on a synchronous network is referred to as a synchronization clock signal (a clock signal for synchronization). The same applies to other embodiments. The synchronization clock signal may be the same as the reference clock signal or different in frequency from the reference clock signal. Although not graphically illustrated, each of the communications devices 40 and 50 is connectable to other communications devices on the synchronous network.

The synchronization signal transmitter 42 at Point A includes a clock extraction part 58, a frequency division part 60, and a synchronization signal generation and transmission part 62. Here, the clock extraction part 58 may be provided inside the xDSL-synchronous network interface unit 44. The clock supplier 48 at Point B includes a synchronization signal extraction part 64 and a clock reproduction and output part 66.

According to the configuration shown in FIG. 4, the synchronization signal transmitter 42 generates a synchronization signal from the synchronization clock signal and multiplexes the synchronization signal as an analog signal of a frequency band different from that of an xDSL signal with the xDSL signal over the metallic line 54. The clock supplier 48 at Point B extracts the synchronization signal from the metallic line 54, reproduces the synchronization clock signal synchronizing with the reference clock signal based on the extracted synchronization signal, and supplies the reproduced synchronization clock signal to the xDSL-synchronous network interface unit 46. Then, the synchronization clock signal is supplied to the communications device 50.

The communications device 50 can synchronize with the communications device 40 based on the supplied synchronization clock signal and can properly perform communications on the synchronous network. The synchronization-related operation of each part in the communications system shown in FIG. 4 is as follows.

The clock extraction part 58 extracts the synchronization clock signal from a signal transmitted from the communications device 40. The frequency division part 60 performs frequency division on the synchronization clock signal extracted by the clock extraction part 58 so that the clock signal has an appropriate frequency, and inputs the frequency-divided clock signal to the synchronization signal generation and transmission part 62. The synchronization signal generation and transmission part 62 generates a synchronization signal that is an analog signal of a frequency band different from that of the xDSL signal by shaping the waveform of the input clock signal, and outputs the generated synchronization signal to the metallic line 54.

The synchronization signal extraction part 64 at Point B extracts the synchronization signal from a signal transmitted over the metallic line 54, and inputs the extracted synchronization signal to the clock reproduction and output part 66. The clock reproduction and output part 66 reproduces the synchronization clock signal based on the synchronization signal, and supplies the reproduced synchronization clock signal to the xDSL-synchronous network interface unit 46.

### [Second Embodiment]

Next, a description is given of a second embodiment of the present invention.

### (Basic Configuration)

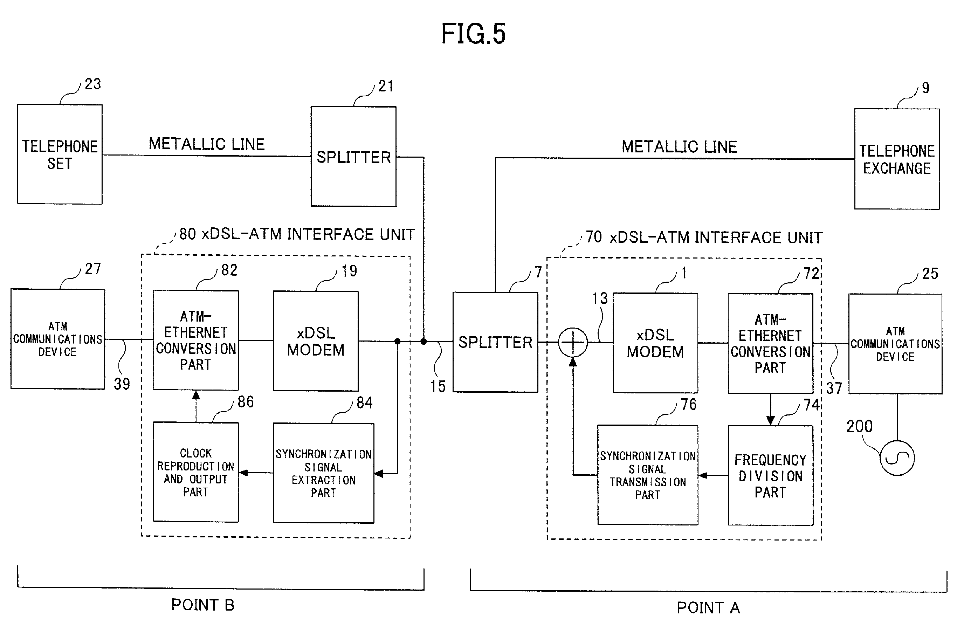

FIG. 5 is a diagram showing a configuration of a communications system according to the second embodiment of the present invention. In the second embodiment, the synchronous system between communications devices as described in the first embodiment is applied to the configuration shown in FIG. 3. In FIG. 5, the same elements as those described above are referred to by the same reference numerals.

As shown in FIG. 5, the telephone exchange 9 is provided at Point A and connected to the splitter 7. Further, the ATM communications device 25, supplied with a reference clock signal from the reference clock 200, and an xDSL-ATM interface unit 70 are provided at Point A.

The xDSL-ATM interface unit 70 includes an ATM-Ethernet conversion part 72, the xDSL modem 1, a frequency division part 74, and a synchronization signal transmission part 76. The synchronization signal transmission part 76 is connected to the metallic line 13.

At Point B, the telephone set 23 and the splitter 21 are provided, and the splitter 21 is connected to the metallic line 15. Further, an xDSL-ATM interface unit 80 and the ATM communications device 27 are provided at Point B. The xDSL-ATM interface unit 80 includes the xDSL modem 19, an ATM-Ethernet conversion part 82, a synchronization signal extraction part 84, and a clock reproduction and output part 86.

In the communications system shown in FIG. 5, communications data based on network synchronization are relayed using asynchronous communications based on xDSL. An ATM cell output from the ATM communications device 25 is converted into an Ethernet frame to be output from the xDSL modem 1 as an xDSL signal, which reaches Point B by way of the metallic line 15.

Further, a synchronization clock signal synchronizing with the reference clock signal is transmitted onto the ATM line 37 from the ATM communications device 25. The xDSL-ATM interface unit 70 extracts the synchronization clock signal from the ATM line 37, generates a synchronization signal from the synchronization clock signal, and transfers the generated synchronization signal as an analog signal by way of the metallic line 15. The xDSL-ATM interface unit 80 reproduces the synchronization clock signal from the received synchronization signal, and synchronizes the xDSL-ATM interface unit 80 and the ATM communications device 27 with the reference clock of the ATM network. A description is given below of the operation of each part in the xDSL-ATM interface units 70 and 80 in FIG. 5.

The ATM-Ethernet conversion part 72 at Point A converts an ATM cell received from the ATM line 37 into an Ethernet frame, and inputs the Ethernet frame to the xDSL modem 1. Further, the ATM-Ethernet frame 72 converts an Ethernet frame received from the xDSL modem 1 into an ATM cell. Further, the ATM-Ethernet conversion part 72 has the function of extracting the synchronization clock signal of the ATM network from a signal transmitted over the ATM line 37 and passing the extracted synchronization clock signal to the frequency division part 74.

The frequency division part 74, which is, for example, a counter circuit, performs frequency division on the synchronization clock signal received from the ATM-Ethernet conversion part 72 so that the synchronization signal transmitted over the metallic lines 13 and 15 has an appropriate frequency.

The clock signal extracted from the ATM line 37 generally has a high frequency. If the synchronization signal is generated and transmitted to the metallic lines 13 and 15 with this frequency unchanged, the frequency of the synchronization signal may overlap with the operating frequency band of xDSL. Further, since the frequency is high, the loss in the metallic lines 13 and 15 increases. Accordingly, the frequency of the synchronization clock signal received from the ATM-Ethernet conversion part 72 is reduced to a frequency of an order of magnitude of a few kHz in the frequency division part 74.

The synchronization signal transmission part 76 creates the synchronization signal by shaping the waveform of the clock signal received from the frequency division part 74, and transmits the synchronization signal onto the metallic line 13. The synchronization signal is of a single frequency, and the frequency is out of the operating frequency band in xDSL. This prevents the synchronization signal and a data signal transmitted in xDSL from interfering with each other.

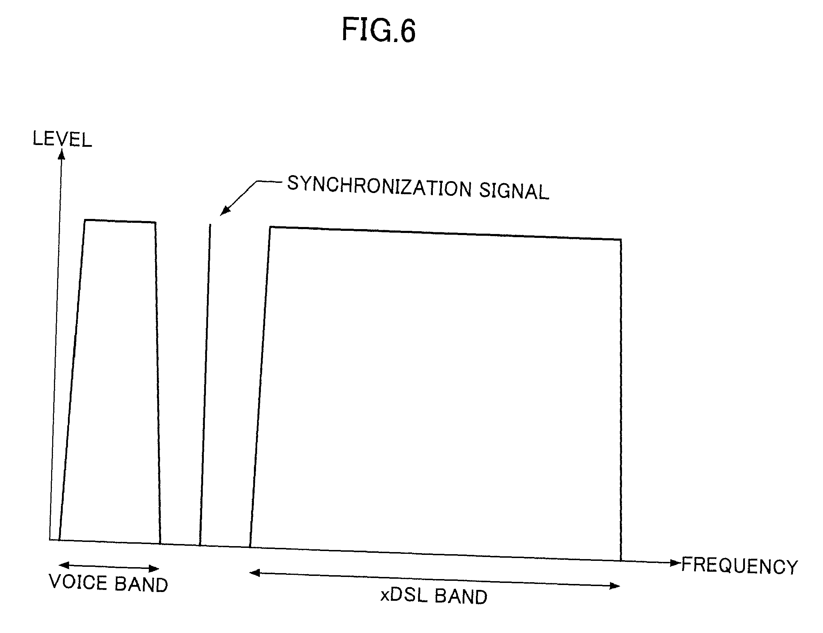

FIG. 6 is a graph showing the frequency spectrum of the synchronization signal transmitted onto a metallic line in this embodiment. As shown in FIG. 6, the synchronization signal uses a frequency in a frequency band that does not overlap the band of a voice signal transmitted over the metallic line or the band used in xDSL.

The synchronization signal extraction part 84 in the xDSL-ATM interface unit 80 at Point B separates the synchronization signal from a multiplexed signal of the audio signal, the xDSL signal, and the synchronization signal on the metallic line 15, and passes the separated synchronization signal to the clock reproduction and output part 86. The clock reproduction and output part 86 generates the synchronization clock signal of the ATM network based on the synchronization signal received from the synchronization signal extraction part 84, and supplies the generated synchronization clock signal to the ATM-Ethernet conversion part 82.

The ATM-Ethernet conversion part 82 converts an ATM cell received from the ATM communications device 27 into an Ethernet frame, and transmits the Ethernet frame to the xDSL modem 19. Further, the ATM-Ethernet conversion part 82 converts an Ethernet frame received from the xDSL modem 19 into an ATM cell, and transmits the ATM cell to the ATM communications device 27. At this point, the ATM-Ethernet conversion part 82 performs communications in synchronization with the ATM network using the synchronization clock signal of the ATM network received from the clock reproduction and output part 86.

### (First Detailed Configuration)

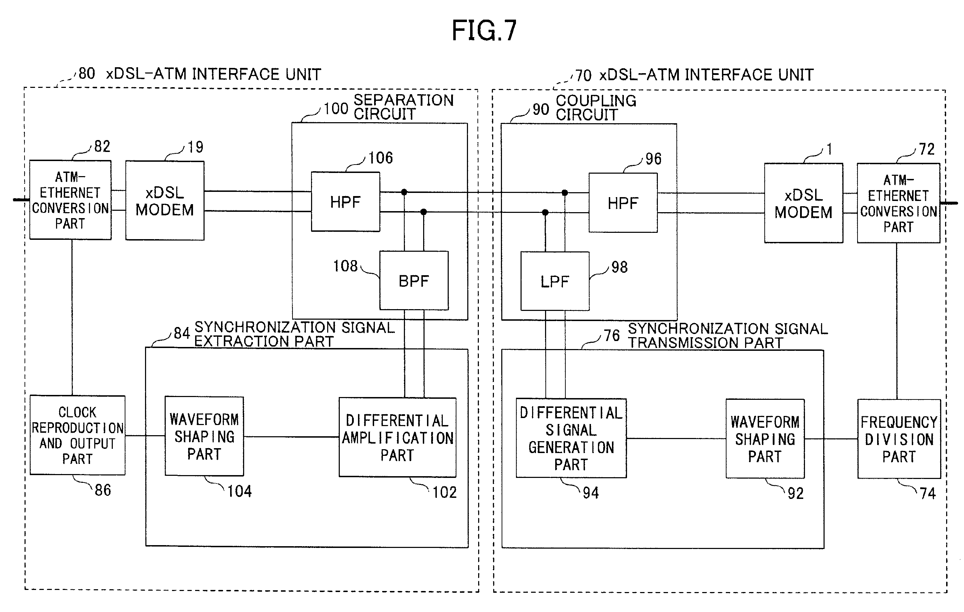

FIG. 7 is a diagram showing a first detailed configuration of the xDSL-ATM interface units 70 and 80. FIG. 7 shows in detail the synchronization signal transmission part 76 and a coupling circuit 90 in the xDSL-ATM interface unit 70. The coupling circuit 90 supplies the synchronization signal to the metallic line 13. Further, FIG. 7 shows in detail a separation circuit 100 and the synchronization signal extraction part 84 in the xDSL-ATM interface unit 80. The separation circuit 100 separates the synchronization signal from a signal transmitted over the metallic line 15.

The synchronization signal transmission part 76 in the xDSL-ATM interface unit 70 includes a waveform shaping part 92 and a differential signal generation part 94. Further, the coupling circuit 90 includes a high-pass filter (HPF) 96 for passing the xDSL signal and eliminating the synchronization signal and a low-pass filter (LPF) 98 for passing the synchronization signal and eliminating the xDSL signal.

Further, the synchronization signal extraction part 84 in the xDSL-ATM interface unit 80 includes a differential amplification part 102 and a waveform shaping part 104. Further, the separation circuit 100 includes a high-pass filter (HPF) 106 for passing the xDSL signal and eliminating the synchronization signal and a bandpass filter (BPF) 108 for eliminating the xDSL signal and the voice signal and passing only the synchronization signal. Next, a description is given of an operation in the configuration of FIG. 7.

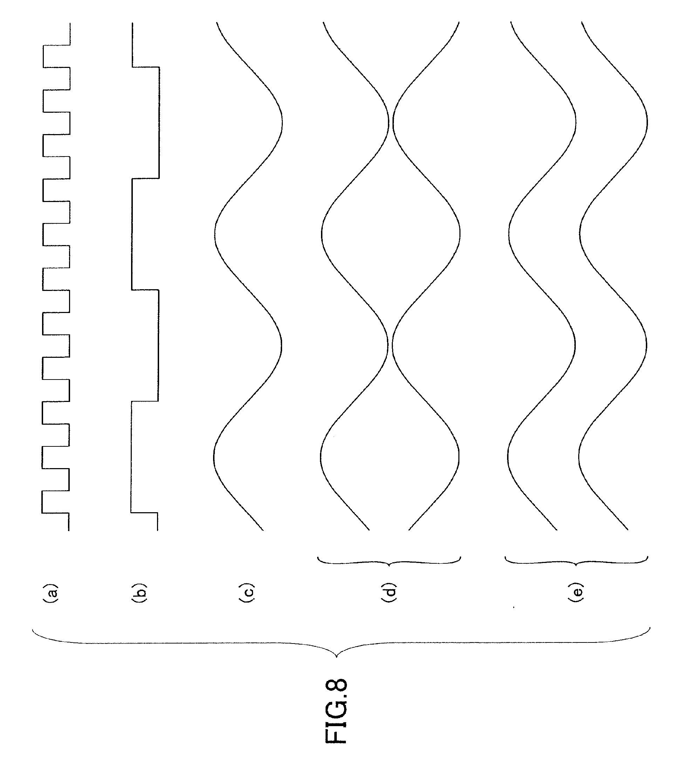

The ATM-Ethernet conversion part 72 at Point A extracts the synchronization clock signal of the ATM network and outputs the extracted synchronization clock signal to the frequency division part 74. The frequency division part 74 reduces the frequency of the synchronization clock signal to a predetermined frequency, and outputs the clock signal of the reduced frequency to the synchronization signal transmission part 76. Referring to FIG. 8, (a) shows an example of the synchronization clock signal extracted by the ATM-Ethernet conversion part 72, and (b) shows an example of the output signal of the frequency division part 74.

Next, the output signal of the frequency division part 74 is input to the waveform shaping part 92 of the synchronization signal transmission part 76. The waveform shaping part 92 converts a square or rectangular wave signal into a sinusoidal signal (of a single frequency). Referring to FIG. 8, (c) shows an example of the output signal of the waveform shaping part 92.

The output signal of the waveform shaping part 92 is input to the differential signal generation part 94. The differential signal generation part 94 generates a differential signal (two sinusoidal waves different in phase) for a metallic line (having the Tip and Ring wires of a subscriber line) for differential transmission from the output signal of the waveform shaping part 92. The level of the differential signal represents the potential difference of two signals. Referring to FIG. 8, (d) shows an example of the differential signal. The differential signal output from the differential signal generation part 94 is superposed on the metallic line from the coupling circuit 90.

The synchronization signal, which is a differential signal, is transmitted to the xDSL-ATM interface unit 80 through the metallic line, and is separated from other signals by the separation circuit 100 to be input to the differential amplification part 102 in the synchronization signal extraction part 84. The differential amplification part 102 performs differential amplification to convert the synchronization signal of differential transmission into non-differential transmission. Then, the synchronization signal is converted into the square or rectangular wave signal shown in (b) of FIG. 8 by the waveform shaping part 104 to be input to the clock reproduction and output part 86.

The clock reproduction and output part 86, which includes, for example, a PLL circuit having a frequency conversion function, generates the synchronization clock signal ((a) in FIG. 8) synchronizing with the reference clock signal of the ATM network based on the signal input from the waveform shaping part 104, and outputs the synchronization clock signal to the ATM-Ethernet conversion part 82. The ATM-Ethernet conversion part 82 establishes synchronization with the ATM network using the synchronization clock signal output from the clock reproduction and output part 86.

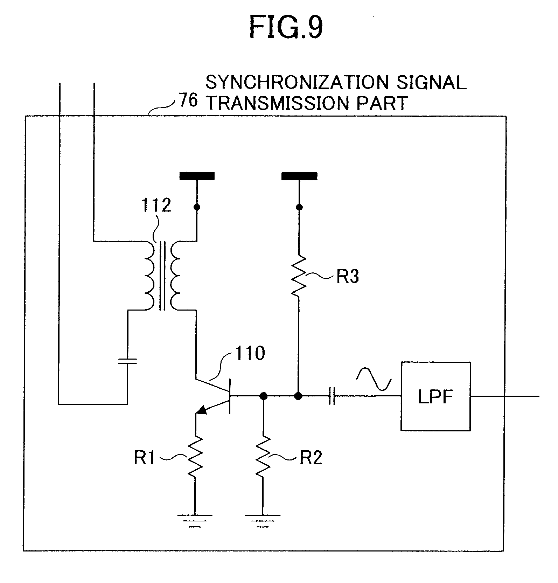

FIG. 9 is a diagram showing a specific circuit forming the synchronization signal transmission part 76. As shown in FIG. 9, a low-pass filter (LPF) may be used as the waveform shaping part 92. Further, a transistor 110, an amplifier circuit having resistors R1, R2, and R3, and a transformer 112 may be used as the differential signal generation part 94. A sinusoidal signal amplified by the amplifier circuit is input to the primary coil of the transformer 112, and a differential signal is output from the secondary coil of the transformer 112.

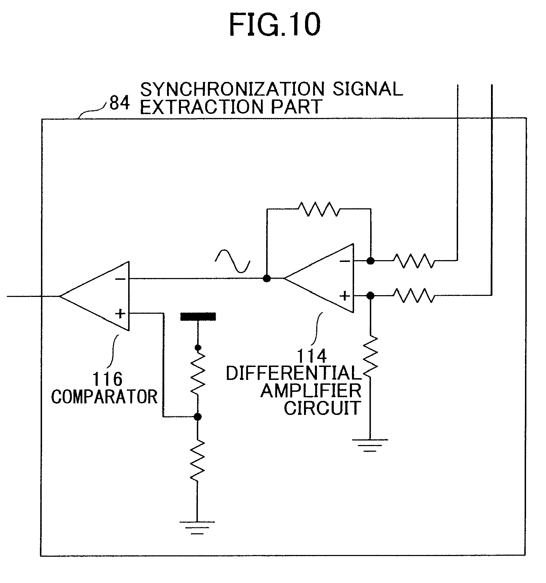

FIG. 10 is a diagram showing a specific circuit forming the synchronization signal extraction part 84. As shown in FIG. 10, a differential amplifier circuit 114 including an operational amplifier may be used as the differential amplification part 102, and a comparator circuit 116 including an operational amplifier may be used as the waveform shaping part 104.

In the first detailed configuration shown in FIG. 7, the synchronization signal, the xDSL signal, and the voice signal are differential signals, and interfere with one another if their frequency bands overlap. Accordingly, their frequency bands should be separated. Since external noise enters a metallic line with an in-phase signal, the first configuration using a differential signal as the synchronization signal is less susceptible to external noise.

### (Second Detailed Configuration)

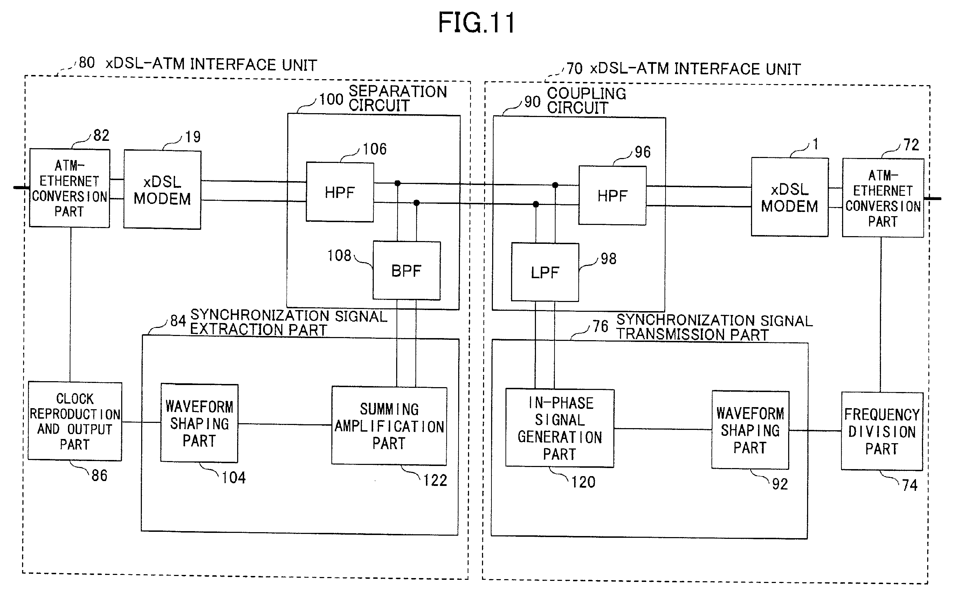

FIG. 11 is a diagram showing a second detailed configuration of the xDSL-ATM interface units 70 and 80. A description is given below of differences from the first detailed configuration.

The second detailed configuration is different from the first detailed configuration in that an in-phase signal is generated as the synchronization signal to be superposed on the metallic line. Accordingly, the differential signal generation part 94 in the first detailed configuration is replaced with an in-phase signal generation part 120 in the second detailed configuration. Further, the differential amplification part 102 in the first detailed configuration is replaced with a summing amplification part 122 in the second detailed configuration.

The in-phase signal generation part 120 generates an in-phase signal (two sinusoidal waves of the same phase) for a metallic line (having the Tip and Ring wires of a subscriber line) for differential transmission from the output signal of the waveform shaping part 92. Referring to FIG. 8, (e) shows an example of the in-phase signal. The in-phase signal output from the in-phase signal generation part 120 is superposed on the metallic line from the coupling circuit 90.

The summing amplification part 122 receives the synchronization signal from the separation circuit 100. The summing amplification part 122 performs summing amplification to covert the synchronization signal of differential transmission into non-differential transmission, and outputs the summing-amplified signal to the waveform shaping part 104.

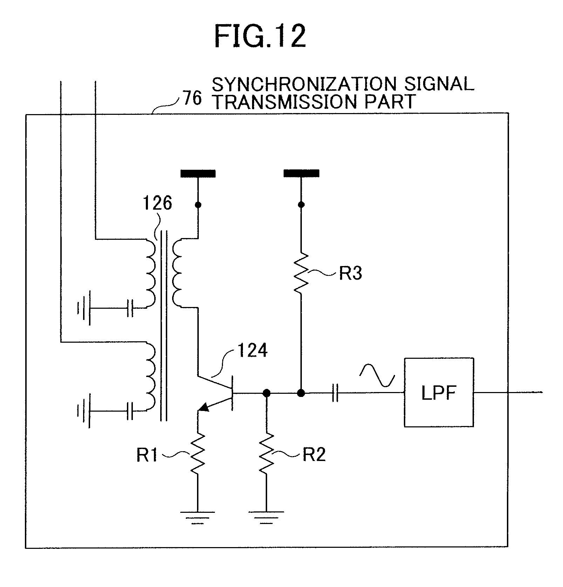

FIG. 12 is a diagram showing a specific circuit forming the synchronization signal transmission part 76 in the second detailed configuration. As shown in FIG. 12, an amplifier circuit having a transistor 124 and resistors R1, R2, and R3 and a transformer 126 may be used as the in-phase signal generation part 120. A sinusoidal signal amplified by the amplifier circuit is input to the primary coil of the transformer 126, and an in-phase signal is output from the two secondary coils of the transformer 126.

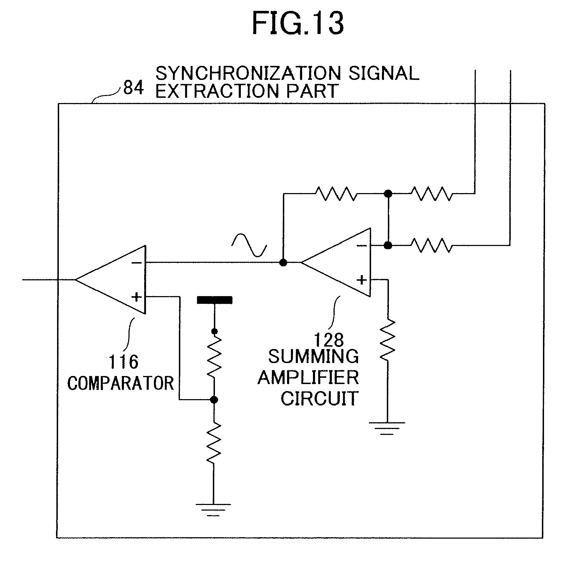

FIG. 13 is a diagram showing a specific circuit forming the synchronization signal extraction part 84 in the second detailed configuration. As shown in FIG. 13, a summing amplifier circuit 128 including an operational amplifier may be used as the summing amplification part 122.

In the second detailed configuration shown in FIG. 11, the xDSL signal and the voice signal are differential signals, while the synchronization signal is an in-phase signal. Therefore, there is the advantage that the in-phase signal is less likely to interfere with the xDSL signal and the voice signal. However, the synchronization signal, which is an in-phase signal, is susceptible to external noise, which is also an in-phase signal. Therefore, the bandpass filter 108 of the separation circuit 100 in the second detailed configuration has the characteristic of eliminating a noise signal and passing only the synchronization signal.

### [Third Embodiment]

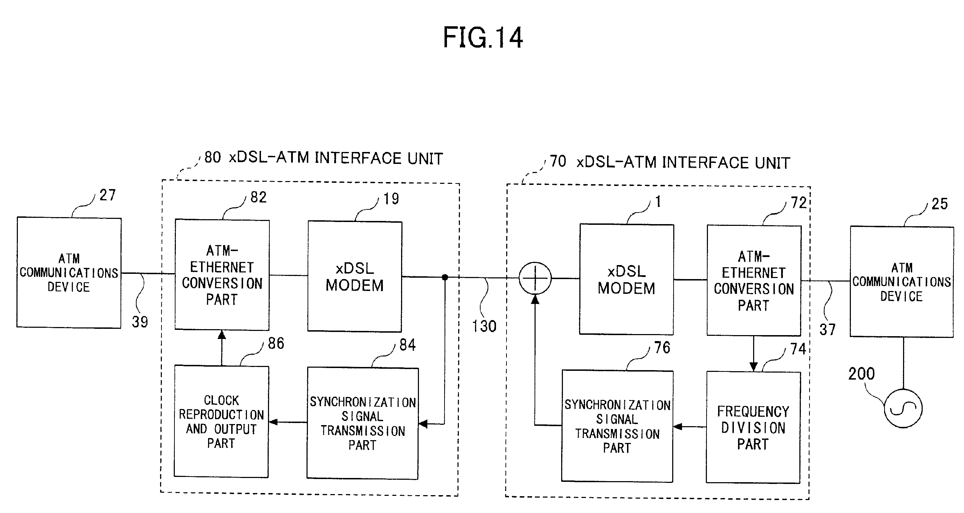

Next, a description is given of a third embodiment of the present invention. FIG. 14 is a diagram showing a configuration of a communications system according to the third embodiment. According to the third embodiment, a metallic line 130, which is not used for voice communications, is used for the communications between the ATM communications devices 25 and 27. As shown in FIG. 14, the configuration of the third embodiment is basically the same as the configuration of the second embodiment shown in FIG. 5 except that no telephone exchange, splitters, or telephone set is provided. Further, the above-described first and second detailed configurations are applicable as its detailed configurations.

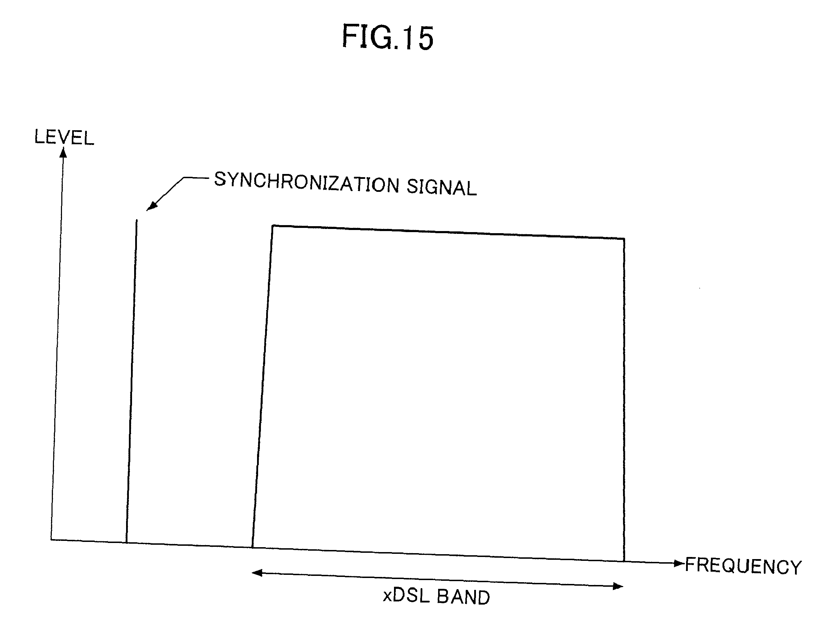

FIG. 15 is a graph showing the frequency spectrum of a signal on the metallic line in the third embodiment. As shown in FIG. 15, since no voice communications are used in the third embodiment, a band not used by the xDSL signal may be employed as the frequency band of the synchronization signal without consideration of the voice band. This increases the latitude in selecting the frequency of the synchronization signal. Further, since no voice communications are used in the third embodiment, the bandpass filter 108 in the separation circuit 100 of the xDSL-ATM interface unit 80 in the first detailed configuration may be replaced with a low-pass filter that eliminates the xDSL signal.

According to the systems described in the first through third embodiments, an xDSL signal and a synchronization signal are superposed on a metallic line, and a synchronization clock signal is generated from the synchronization signal at a receiving end of the synchronization signal. Using this synchronization clock signal makes it possible to synchronize communication devices based on network synchronization and connected through an xDSL line with each other. Accordingly, it is possible to install communications devices based on network synchronization using an existing metallic cable. Therefore, there is no need to prepare a dedicated line such as an expensive optical cable or coaxial cable, and it is possible to construct a system of network synchronization with ease.

Further, the systems described in the first through third embodiments can establish synchronization between communication devices based on network synchronization and connected through an xDSL line with more ease than the system of transmitting synchronization information as digital data.

The present invention is not limited to the specifically disclosed embodiments, and variations and modifications may be made without departing from the scope of the present invention.

## Claims

1. A synchronization system for establishing synchronization between a first communications device and a second communications device connected through a communications line transmitting an xDSL signal, **characterized by**:
a clock extraction part configured to extract, from a synchronous network connected to the first communications device, a synchronization clock signal of the synchronous network;
a synchronization signal generation and transmission part configured to generate a synchronization signal from the synchronization clock signal and to transmit the synchronization signal to the communications line, the synchronization signal having a frequency in a frequency band different from a frequency band of the xDSL signal;
a synchronization signal extraction part configured to extract the synchronization signal from the communications line; and
a clock reproduction and output part configured to reproduce the synchronization clock signal from the synchronization signal and to supply the synchronization clock signal to the second communications device.

2. The synchronization system as claimed in claim 1, **characterized in that** the synchronization signal generation and transmission part is configured to generate a differential signal as the synchronization signal and to transmit the differential signal to the communications line.

3. The synchronization system as claimed in claim 1, **characterized in that** the synchronization signal generation and transmission part is configured to generate an in-phase signal as the synchronization signal and to transmit the in-phase signal to the communications line.

4. The synchronization system as claimed in claim 1, **characterized in that** the synchronization signal generation and transmission part is configured to generate the synchronization signal having the frequency in the frequency band different from the frequency band of the xDSL signal and further different from a frequency band of a voice signal transmitted over the communications line.

5. A synchronization signal transmitter transmitting a synchronization signal used to establish synchronization between a first communications device and a second communications device connected through a communications line transmitting an xDSL signal, **characterized by**:
a clock extraction part configured to extract, from a synchronous network connected to the first communications device, a synchronization clock signal of the synchronous network; and
a synchronization signal generation and transmission part configured to generate the synchronization signal from the synchronization clock signal and to transmit the synchronization signal to the communications line, the synchronization signal having a frequency in a frequency band different from a frequency band of the xDSL signal.

6. The synchronization signal transmitter as claimed in claim 5, **characterized in that** the synchronization signal generation and transmission part is configured to generate a differential signal as the synchronization signal and to transmit the differential signal to the communications line.

7. The synchronization signal transmitter as claimed in claim 5, **characterized in that** the synchronization signal generation and transmission part is configured to generate an in-phase signal as the synchronization signal and to transmit the in-phase signal to the communications line.

8. A clock supplier supplying a synchronization clock signal for establishing synchronization between a first communications device and a second communications device to the second communications device, the first communications device and the second communications device being connected through a communications line transmitting an xDSL signal, **characterized by**:
a synchronization signal extraction part configured to extract a synchronization signal from the communications line, the synchronization signal being generated from the synchronization clock signal of a synchronous network connected to the first communications device and having a frequency in a frequency band different from a frequency band of the xDSL signal; and
a clock reproduction and output part configured to reproduce the synchronization clock signal from the synchronization signal and to supply the synchronization clock signal to the second communications device.

9. The clock supplier as claimed in claim 8, **characterized in that** the synchronization signal is a differential signal.

10. The clock supplier as claimed in claim 8, **characterized in that** the synchronization signal is an in-phase signal.

11. A synchronization method for establishing synchronization between a first communications device and a second communications device connected through a communications line transmitting an xDSL signal, **characterized by** the steps of:
(a) extracting, from a synchronous network connected to the first communications device, a synchronization clock signal of the synchronous network;
(b) generating a synchronization signal from the synchronization clock signal and transmitting the synchronization signal to the communications line, the synchronization signal having a frequency in a frequency band different from a frequency band of the xDSL signal;
(c) extracting the synchronization signal from the communications line; and
(d) reproducing the synchronization clock signal from the synchronization signal and supplying the synchronization clock signal to the second communications device.
